# EUROPEAN PATENT APPLICATION

(11) **EP 1 405 734 A1**
(43) Date of publication of application: **07.04.2004**
(21) Application number: 02743867.0
(22) Date of filing: 09.07.2002
(51) Int. Cl.: B42D 15/10, G07D 7/00, B41M 3/14, G06K 5/00

(54) **DISCRIMINATION MARK**

(30) Priority: 10.07.2001 JP 2001209776
(71) Applicant: Tokyo Gas Company Limited, Tokyo 105-8527 (JP); NHK SPRING COMPANY LIMITED, Yokohama-shi, Kanagawa 236-0004 (JP)
(72) Inventor: NEDA, Tokudai, c/o Tokyo Gas Co., Ltd., Tokyo 105-8527 (JP); YOKOI, Yasuharu, c/o Tokyo Gas Co., Ltd., Tokyo 105-8527 (JP); HOSHINO, Hidekazu, c/o NHK Spring Co., Ltd., Yokohama-shi, Kanagawa 236-0004 (JP); TAKEUCHI, Itsuo, c/o NHK Spring Co., Ltd., Yokohama-shi, Kanagawa 236-0004 (JP); YAMAMOTOYA, Kenji, c/o NHK Spring Co., Ltd., Yokohama-shi, Kanagawa 236-0004 (JP)
(74) Representative: Goddar, Heinz J., Dr.
(86) International application number: PCT/JP2002/006930
(87) International publication number: WO 2003/006258

(57) **Abstract**

A discrimination mark having both a simple authentication function by perceptual recognition and an accurate authentication function by mechanical recognition enabled by using a combination of a mark having an authentication function by perceptual recognition with a substance having a content of a table isotope different from the natural abundance. The S/N ratio can be made large in making a mechanical recognition, so that the authentication by mechanical recognition can be implemented with high accuracy. The substance having a controlled content of a stable isotope different from the natural abundance is a rate one itself and difficult to produce. As a result, this discrimination mark has a high security level.

## Description

### TECHNICAL FIELD

The invention relates to a discrimination mark capable of coping with both simple authentication by perceptual recognition and accurate authentication by mechanical recognition.

### BACKGROUND TECHNOLOGY

Various techniques have so far been applied to discrimination marks provided for authentication of bank notes, various types of coupons, tickets, etc., each having a monetary value, various cards, big-name brands, and so forth. Those articles tend to be picked as targets for counterfeiting, however, authentication of counterfeited articles, prepared by use of a copy machine available in the market, image capturing equipment, and so forth, can be easily implemented at a shop counter, and the like, by use of discrimination marks that are visually distinguishable.

Recognition conducted simply by the five senses of human beings without use of a tool or machine, relying primarily on visual recognition, is called perceptual recognition (first-line inspection).

Such types of discrimination marks in widespread use include a watermark, perforations, embossment, intaglio, see-through register, planchette, hologram, security threads, fibers, pattern print, geometrical pattern print, microscopic letters, screen trap, scan trap, latent image, DOVID (Diffractive Optically Variable Image Device: a diffraction phenomenon of light is utilized), ISIS (Interference Security Image Structure: an interference phenomenon of light is utilized), glossed pattern, and so forth. Those discrimination marks have an advantage of being visually discriminated with ease, however, have a shortcoming in that those discrimination marks themselves can be counterfeited with relative ease by taking possession of a specialty printer, and so forth.

Recognition conducted by mechanical means is called mechanical recognition (third-line inspection). For example, in JP, 1998 - 287075, A, there has been proposed use of a substance having a content ratio of a stable isotope thereof, controlled at a value different from the natural abundance thereof, as a discrimination mark which security level is high. Since a discrimination mark itself, using the substance as described, is difficult to be counterfeited, the same has a high security level, and is useful when authenticating articles by mechanical recognition using a detection device. However, for authentication by the mechanical recognition, not only use of the detection device is essential but also it is necessary to devise means for enhancing a S/N ratio for detection of a small amount of a discrimination mark. If the S/N ratio is small, either the discrimination mark cannot be detected or only ambiguous detection can be made, thereby rendering the discrimination mark specifically provided meaningless or meaningless in practical terms.

The invention has been developed to resolve the various problems described above, encountered in connection with the conventional discrimination mark. Predicated on use of a substance with a content ratio of a stable isotope thereof, controlled at a value different from the natural abundance thereof, for a discrimination mark, it is therefore an object of the invention to provide a discrimination mark capable of coping with both simple authentication by perceptual recognition such as visual check and accurate authentication by mechanical recognition in addition to difficulty in taking possession of the substance.

### DISCLOSURE OF THE INVENTION

The invention provides a discrimination mark capable of coping with both authentication by perceptual recognition and authentication by mechanical recognition, said discrimination mark being a discrimination mark comprising a substance obtained by controlling a content ratio of a stable isotope thereof at a value different from the natural abundance thereof (1).

The invention provides a discrimination mark capable of coping with both authentication by perceptual recognition imparted to a watermarked base member, and authentication by mechanical recognition, wherein a substance obtained by controlling a content ratio of a stable isotope thereof at a value different from the natural abundance thereof is applied to thin portions of the watermarked base member (2).

The invention provides a discrimination mark capable of coping with both authentication by perceptual recognition by the agency of perforations provided in a base member and authentication by mechanical recognition, wherein a substance obtained by controlling a content ratio of a stable isotope thereof at a value different from the natural abundance thereof is applied to the perforations of the base member as perforated (3).

The invention provides a discrimination mark capable of coping with both authentication by perceptual recognition by the agency of embossment and authentication by mechanical recognition, wherein a substance obtained by controlling a content ratio of a stable isotope thereof at a value different from the natural abundance thereof is applied to depressed portions of the embossment (4).

The invention provides a discrimination mark capable of coping with both authentication by perceptual recognition by the agency of intaglio and authentication by mechanical recognition, wherein the intaglio is intaglio applied by printing with an ink containing a substance obtained by controlling a content ratio of a stable isotope thereof at a value different from the natural abundance thereof (5).

The invention provides a discrimination mark capable of coping with both authentication by perceptual recognition by the agency of a see-through register and authentication by mechanical recognition, wherein the see-through register is a see-through register imparted by printing with an ink containing a substance obtained by controlling a content ratio of a stable isotope thereof at a value different from the natural abundance thereof (6).

The invention provides a discrimination mark capable of coping with both authentication by perceptual recognition by the agency of a planchette, hologram, security threads, or fibers, and authentication by mechanical recognition, wherein the planchette, hologram, security threads, or fibers are a planchette, hologram, security threads, or fibers, formed of material containing a substance obtained by controlling a content ratio of a stable isotope thereof at a value different from the natural abundance thereof (7).

The invention provides a discrimination mark capable of coping with both authentication by perceptual recognition by the agency of a planchette, hologram, or security threads, and authentication by mechanical recognition, wherein the planchette, hologram, or security threads are a planchette, hologram, or security threads, formed by applying material containing a substance obtained by controlling a content ratio of a stable isotope thereof at a value different from the natural abundance thereof to the surface of material higher in reflectivity than a base member (8).

In the case of any one of the invention described under items 1 to 8 as above, for the substance obtained by controlling the content ratio of the stable isotope thereof at the value different from the natural abundance thereof, use is preferably made of a substance containing at least one element selected from the group consisting of carbon, nitrogen, oxygen and hydrogen, and obtained by controlling a content ratio of a stable isotope of at least one element selected from the group consisting of the carbon, nitrogen, oxygen and hydrogen at a value different from the natural abundance thereof.

### BRIEF DESCRIPTION OF THE DRAWINGS

Fig. 1 is a diagram showing infrared absorption spectra of isotopomer of sodium formate;
Fig. 2(a) is a view showing a conventional watermark (Comparative Example a);
Fig. 2(b) is a view showing Comparative Example b;
Fig. 2(c) is a view showing Working Example 1 of the invention;
Fig. 3 is a diagram showing results of measuring transmission spectrum under the same measuring condition by use of an infrared spectrophotometer with reference to Comparative Example b and Working Example 1;
Fig. 4(a) is a view showing conventional perforations (Comparative Example a);
Fig. 4(b) is a view showing Comparative Example b;
Fig. 4(c) is a view showing Working Example 2;
Fig. 5 is a diagram showing results of measuring diffuse reflection spectrum under the same measuring condition by use of an infrared spectrophotometer with reference to Comparative Example b and Working Example 2;
Fig. 6(a) is a view showing a conventional embossment (Comparative Example a);
Fig. 6(b) is a view showing Comparative Example b;
Fig. 6(c) is a view showing Working Example 3;
Fig. 7(a) is a view showing common print (Comparative Example;
Fig. 7(b) is a view showing Working Example 4;
Fig. 8 is a diagram showing results of measuring diffuse reflection spectrum by use of an infrared spectrophotometer with reference to Comparative Example and Working Example 4;
Fig. 9(a) is a view showing Comparative Example;.
Fig. 9(b) is a view showing Working Example 5;
Figs. 10(a) and 10(b) are diagrams showing results of measuring diffuse reflection spectrum by use of an diffuse reflection type infrared spectrophotometer with reference to Comparative Example and Working Example 5, respectively;
Fig. 11(a) is a view showing Comparative Example;
Fig. 11(b) is a view showing Working Example 6;
Fig. 12(a) is a view showing Comparative Example;
Fig. 12(b) is a view showing Working Example 7; and
Figs. 13(a) and 13(b) are diagrams showing results of measuring diffuse reflection spectrum by use of an infrared spectrophotometer with reference to Comparative Example and Working Example 7, respectively.

### BEST MODE FOR CARRYING OUT THE INVENTION

A discrimination mark according to the invention is characterized in that the same is a discrimination mark capable of coping with both authentication by perceptual recognition and authentication by mechanical recognition. Herein, the perceptual recognition means recognition by the five senses of human beings, such as touch, smell, and so forth, besides visual inspection, that is, recognition by the sense of sight.

A conventional watermark, perforations, embossment, intaglio, see-through register, planchette, hologram, security threads, fibers, pattern print, geometrical pattern print, microscopic letters, screen trap, scan trap, latent image, DOVID, ISIS, and glossed pattern belong to a discrimination mark, and with the use of those, the authentication by perceptual recognition can be conducted. The discrimination mark according to the invention is characterized in that the same maintains such a function as the authentication by perceptual recognition as it is, having such an additional function as the authentication by mechanical recognition.

With the discrimination mark according to the invention, a substance obtained by controlling a content ratio of a stable isotope thereof at a value different from the natural abundance thereof is applied to the discrimination mark having the function of the authentication by perceptual recognition in order to enable the authentication by mechanical recognition using a detection device to be conducted. Accordingly, it is possible to conduct the authentication by the mechanical recognition in addition to the authentication by the perceptual recognition. Because it is difficult to take possession of the substance obtained by controlling the content ratio of the stable isotope at the value different from the natural abundance thereof, and to counterfeit the substance itself, the substance is quite useful for prevention of counterfeiting of the discrimination mark.

A discrimination mark can be applied to a base member made of various constituent materials and the same applies to the discrimination mark according to the invention. That is, the discrimination mark can be applied to a base member made of hard paper, various other types of paper, various plastics, a synthetic resin such as, for example, acrylic resin, polyester resin, a polyolefin (polyvinyl chloride etc, included) resin, polyamide resin, polyurethane resin, polycarbonate resin, etc., or metal such as aluminum, aluminum alloy, etc.

For a substance obtained by controlling a content ratio of a stable isotope thereof at a value different from the natural abundance thereof, to be used in carrying out the invention, use may be made of any substance obtained by controlling a content ratio of a stable isotope thereof at a value different from the natural abundance thereof, however, use is preferably made of a substance containing at least one element selected from the group consisting of carbon, nitrogen, oxygen, and hydrogen. Then, use is made of a substance obtained by controlling a content ratio of a stable isotope of at least one element, selected from the group consisting of the carbon, nitrogen, oxygen, and hydrogen, at a value different from the natural abundance thereof.

Natural isotope abundance ratios of carbon, nitrogen, oxygen, and hydrogen are ¹²C : ¹³C = 98.89 :1.11, ¹⁴N : ¹⁵N = 99.63 : 0.366, ¹⁶O : ¹⁷O : ¹⁸O = 99.76 : 0.038 : 0.204, and ¹H : ²H = 99.985 : 0.015, respectively. A substance of which the discrimination mark according to the invention is composed is a substance containing those elements, obtained by controlling content ratios of stable isotopes thereof at values different from the natural isotope abundance ratios thereof, respectively (that is, obtained by differentiating the content ratios of the stable isotopes thereof from the natural isotope abundance ratios thereof, respectively). As a form in which the content ratios of the stable isotopes thereof are differentiated, a content ratio of one species or not less than two species of stable isotopes of the respective elements may be rendered less or more than the natural isotope abundance ratio thereof, respectively.

By way of example, the substance includes an inorganic substance (1), containing C, N, O, H, etc. as constituents thereof such as, for example, NaHCO₃ and an organic substance (2), containing C, N, O, H, etc. as constituents thereof such as, for example, fatty acid, alcohols, amides such as urea etc., amino acids, gulcoses, and aromatic compound, or derivatives of salts etc. thereof. Some of those substances contain two or more species of stable isotopes, in which case a content ratio of at least one species of the stable isotope is controlled so as to be at a value different from the natural abundance thereof. C, N, and O, among those elements C, N, O, and H, are harmless to living bodies while, in the case of H, since there are many species of substances containing H, it is easy to select and produce a substance for use in the discrimination mark, which is advantageous in terms of cost.

The discrimination mark according to the invention can be made up in various forms as described under items (1) to (7) below. The items (1) to (3) among those items represent forms in which the discrimination mark is made up at specified spots of respective articles, and the items (4) to (7) represent forms in which the discrimination mark is made up by applying a substance obtained by controlling a content ratio of a stable isotope thereof at a value different from the natural abundance thereof as a constituent material of specified spots of respective articles.
(1) a discrimination mark with a substance obtained by controlling a content ratio of a stable isotope thereof at a value different from the natural abundance thereof, applied to thin portions of a watermarked base member. The discrimination mark according to the invention is composed of a watermark and the substance obtained by controlling the content ratio of the isotope thereof at the value different from the natural abundance thereof. With this discrimination mark, amount of light absorption by the base member decreases at the time of mechanical recognition, so that a noise signal is lowered, resulting in enhancement of an S / N ratio of the mechanical recognition.
(2) a discrimination mark with a substance obtained by controlling a content ratio of a stable isotope thereof at a value different from the natural abundance thereof, applied to perforations of a perforated base member. The discrimination mark according to the invention is composed of the perforations and the substance obtained by controlling the content ratio of the stable isotope thereof at the value different from the natural abundance thereof. With the discrimination mark, a mount of light absorption by the base member considerably decreases at the time of mechanical recognition, so that a noise signal is lowered, resulting in enhancement of an S / N ratio of the mechanical recognition.
(3) a discrimination mark with a substance obtained by controlling a content ratio of a stable isotope thereof at a value different from the natural abundance thereof, applied to depressed portions of embossment provided in a base member. The discrimination mark according to the invention is composed of the embossment and the substance obtained by controlling the content ratio of the stable isotope thereof at the value different from the natural abundance thereof. With this discrimination mark, as it is possible to secure a proper thickness of portions of the base member, provided with the substance obtained by controlling the content ratio of the stable isotope thereof at the value different from the natural abundance thereof, an S / N ratio at the time of mechanical recognition can be enhanced, so that there are obtained additional effects such as prevention of wear-out of the substance obtained by controlling the content ratio of the stable isotope thereof at the value different from the natural abundance thereof, and reinforcement of carved portions of the base member.
(4) a discrimination mark formed by applying intaglio by printing with an ink containing a substance obtained by controlling a content ratio of a stable isotope thereof at a value different from the natural abundance thereof.
(5) a discrimination mark made up of a see-through register formed by printing with an ink containing a substance obtained by controlling a content ratio of a stable isotope thereof at a value different from the natural abundance thereof.
   With those discrimination marks under the items (4) and (5) above, respectively, since it is possible to secure a proper thickness of portions of the base member, provided with the substance obtained by controlling the content ratio of the stable isotope thereof at the value different from the natural abundance thereof as with the case of the item (3) above, and an S / N ratio at the time of mechanical recognition can be enhanced, there are obtained additional effects such as prevention of wear-out of the substance obtained by controlling the content ratio of the stable isotope thereof at the value different from the natural abundance thereof, and reinforcement of carved portions of the base member.
(6) a discrimination mark made up of a planchette, hologram, security threads, or fibers, formed of material containing a substance obtained by controlling a content ratio of a stable isotope thereof at a value different from the natural abundance thereof. The discrimination mark according to the invention is made up of the planchette, hologram, security threads, or fibers, and the substance obtained by controlling the content ratio of the stable isotope thereof at the value different from the natural abundance thereof. Because the planchette, hologram, security threads, or fibers are suitable to be mixed into articles to a large quantity, this discrimination mark is also effective as a method of enhancing sensitivity of detection by mechanical recognition.
(7) a discrimination mark made up of a planchette, hologram, or security threads, formed by applying material containing a substance obtained by controlling a content ratio of a stable isotope thereof at a value different from the natural abundance thereof to the surface of material such as an aluminum foil, and so forth, higher in reflectivity than a base member. With this discrimination mark, since the substance, obtained by controlling the content ratio of the stable isotope thereof at the value different from the natural abundance thereof, is applied to the surface of the material higher in reflectivity than the base member, light reflectivity thereof is higher than that of paper (bank notes, securities, etc.) and so forth, that is, the base member, so that an S / N ratio at the time of mechanical recognition by detection of reflected light spectrum is enhanced.

Besides those discrimination mark described above, there are discrimination marks made up of pattern, geometrical pattern, microscopic letter, screen trap, scan trap, intaglio pattern, latent image, DOVID, ISIS, or glossed pattern, printed with an ink containing a substance obtained by controlling a content ratio of a stable isotope thereof at a value different from the natural abundance thereof. In the case of these discrimination marks, an S / N ratio at the time of mechanical recognition thereof is not different from that for discrimination marks formed by a common printing method. However, as with the previously-described cases, discrimination from forgeries produced by a copy machine or photo printer can be easily implemented through visual recognition with these discrimination marks. In addition, since discrimination from more sophisticated forgeries can be accurately and speedily implemented through mechanical recognition, these discrimination marks are provided with a plurality of recognizabilities, and furthermore, since the substance obtained by controlling the content ratio of the stable isotope thereof at the value different from the natural abundance thereof is used, these discrimination marks will be discrimination marks having a high security level.

It is known that infrared absorption / Raman spectrum of a substance obtained by controlling a content ratio of ¹³C at a value different from the natural abundance thereof differs from infrared absorption / Raman spectrum of a natural substance corresponding to the substance. With the substance of which the discrimination mark according to the invention is composed, the content ratio of the stable isotope thereof is differentiated from the natural abundance thereof, so that the substance differs from a substance corresponding thereto, having the natural abundance of the stable isotope, in respect of vibration spectrum (infrared absorption and Raman spectrum) and NMR signal spectrum. Because such difference varies individually depending on, for example, a ratio of a ¹²C content to a ¹³C content in the case of carbon, it is possible to detect the ratio of the ¹²C content to the ¹³C content by measuring the difference through infrared spectroscopy or Raman spectroscopy Further, the ratio of the ¹²C content to the ¹³C content can also be detected by use of the NMR method. With the invention, authentication of respective articles to which the discrimination mark according to the invention is applied is conducted by mechanical recognition using an infrared spectrophotometer, a Raman spectrophotometer (WO 02/29705) or an NMR device (JP, 1998 - 287075, A).

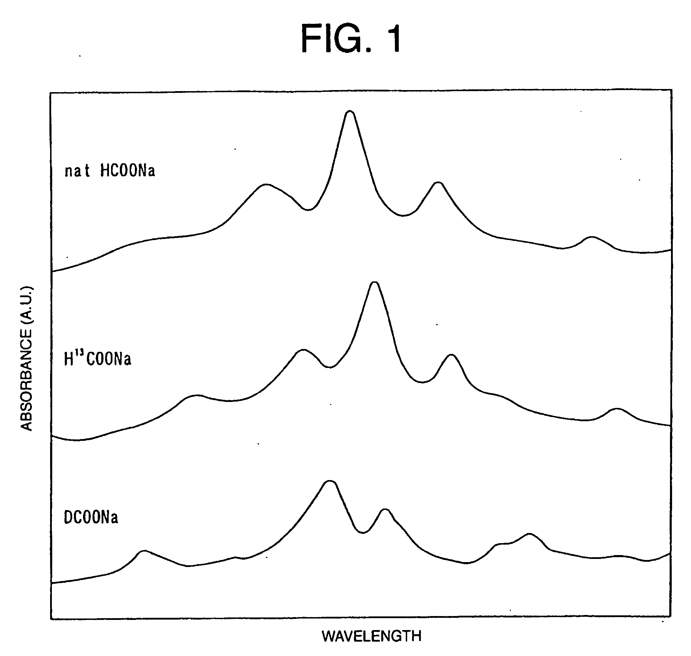

Fig. 1 is a diagram showing results of measuring vibration spectra of three kinds of sodium formates produced as an example by use infrared spectroscopy. With reference to a sodium formate having the natural isotope abundance (shown as nat HCOONa in Fig. 1; referred to "specimen 1"), a sodium formate having a stable isotope¹³C content ratio controlled at 99% (shown as H¹³COONa in Fig. 1; referred to "specimen 2", and a sodium formate having a stable isotope D (=²H) content ratio controlled at 99% (shown as DCOONa in Fig. 1; referred to "specimen 3"), there were measured by use infrared spectroscopy and recorded the vibration spectra thereof as information reflecting stable isotope content ratios of carbon and hydrogen, respectively

As is evident from Fig. 1, it is shown that the specimens 1, 2, and 3 are composed of the same kind of substance called sodium formate, respectively, but have respective vibration spectra differing from each other because respective stable isotope content ratios thereof differ from each other. By applying the sodium formate according to the specimens 2, and 3, respectively, to respective articles, or by mixing the same as discrimination material into an ink or constituent materials of the respective articles, the sodium formate can be utilized as a discrimination mark or discrimination material, having a specific vibration spectrum. Further, it is also possible to utilize a mixture obtained by mixing 2 or 3 kinds of the specimens 1 through 3 at a specific concentration ratio as a discrimination mark or discrimination material, having a specific vibration spectrum.

### EXAMPLES

The invention will be described in more details hereinafter based on embodiments thereof, however, it is to be pointed out that the scope of the invention is certainly not limited thereto.

With the following examples, use was made of a discrimination mark containing a substance obtained by controlling a content ratio of a stable isotope at a value different from the natural abundance thereof, produced by preparing as described under (1) to (3) below.
(1) a semitransparent ink (light white in color) was prepared by causing 15 wt.% (a ratio against the ink in whole; the same applies hereinafter) of sodium formate with a hydrogen isotope content ratio controlled at D : H (= ²H : ¹H) = 99 : 1 to be contained in ink components, that is, a resin, solvent, and an additive, respectively. The same is referred to hereinafter as "a controlled-isotope semitransparent ink".
(2) a colored ink was prepared by causing 15 wt.% (a ratio against the ink in whole; the same applies hereinafter) of sodium formate with a carbon isotope content ratio controlled at ¹³C : ¹²C = 99 : 1 to be contained in a pigment, resin, solvent, and an additive, respectively, which are constituents of the ink. The same is referred to hereinafter as "a controlled-isotope colored ink (A)".
(3) a colored ink was prepared by causing 15 wt.% (a ratio against the ink in whole; the same applies hereinafter) of sodium formate with a hydrogen isotope content ratio controlled at D : H (= ²H : ¹H) = 99 : 1 to be contained in a pigment, resin, solvent, and an additive, respectively, which are constituents of the ink. The same is referred to hereinafter as "a controlled-isotope colored ink (B)".

### Working Example 1

This example represents a case of the discrimination mark according to the invention, with a substance obtained by controlling a content ratio of a stable isotope thereof at a value different from the natural isotope abundance thereof, applied to thin portions of a watermarked base member.

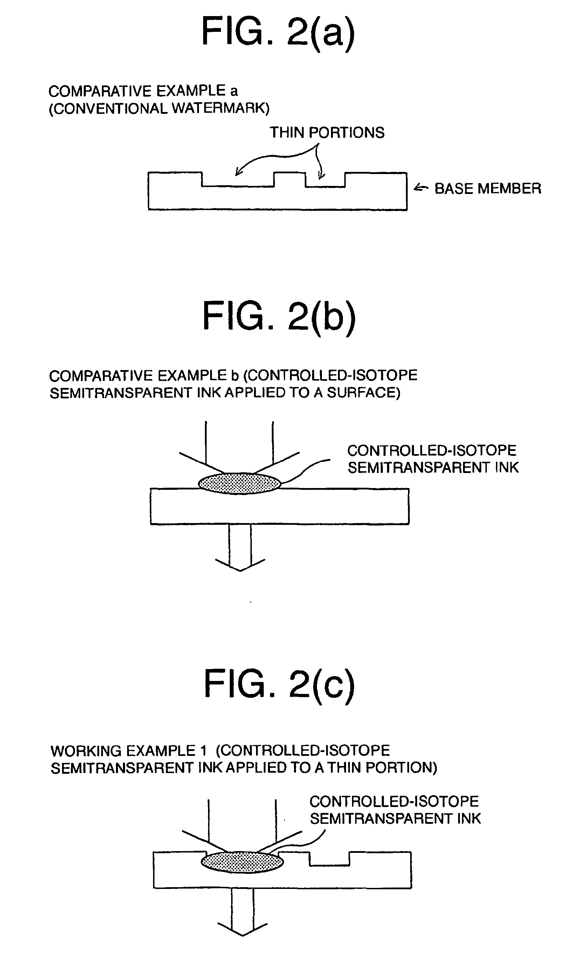

Fig. 2(a) is a view showing a conventional watermark (Comparative Example a). When looking through a white watermark, a white portrait of a thin portion of a base member is brought into relief. The conventional watermark is a discrimination mark serving as a target for visual inspection, that is, perceptual recognition.

Fig. 2(b) is a view showing a case where the controlled-isotope semitransparent ink is applied to the surface of paper about 100 µm thick (Comparative Example b). Since difference in an isotope content ratio is not shown as a definite difference in properties of ink, the difference in the isotope content ratio cannot be recognized by perceptual recognition, but can be discriminated only by mechanical recognition.

Fig. 2(c) is a view showing the present working example of the invention, which is a discrimination mark with the controlled-isotope semitransparent ink applied to a thin portion of the same watermarked paper as described above as a base member (working example 1). In this case, the controlled-isotope semitransparent ink is applied to a thickness about 60 µm to the thin portion (thickness: about 60 µm) of the paper about 100 µm thick, where a white watermark is provided. With this example, discrimination can be implemented by mechanical recognition as well in addition to by visual inspection, so that there is provided a discrimination mark having a high-security level.

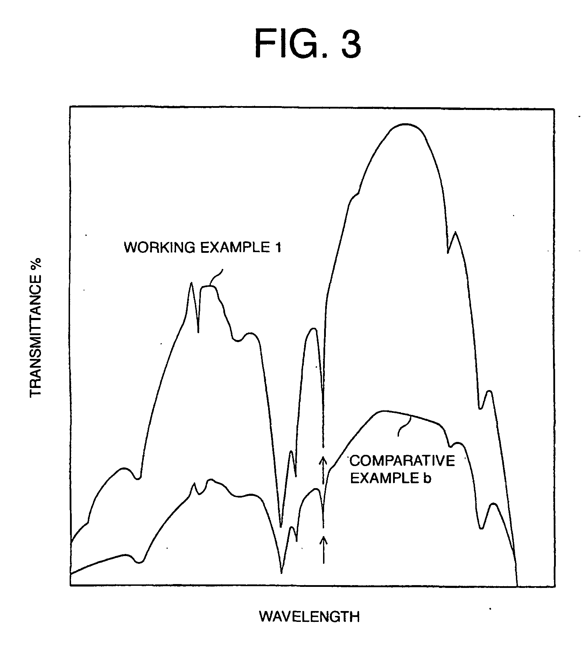

Fig. 3 is a diagram showing results of measuring transmission spectrum under the same measuring condition by use of an infrared spectrophotometer with reference to Comparative Example b (Fig. 2(b)) and Working Example 1 (Fig. 2(c)). As shown in Fig. 3, in the case of Comparative Example b, the controlled-isotope semitransparent ink is applied to the paper about 100 µm thick, having no thin portion, and consequently, transmission spectrum of Comparative Example b indicates that transmittance is low, and vertical variation of a graph of the transmission spectrum, that is, difference in transmittance in relation to wavelength is not steep.

In contrast, in the case of Working Example 1, since the controlled-isotope semitransparent ink is applied to the thin portion with thickness about 60 µm, vibration spectrum of Working Example 1 indicates that transmittance is by far higher. Further, difference in transmittance in relation to wavelength is steep, and absorptivity (= the reciprocal of transmittance) in an absorption wavelength region [In Fig. 3, a region in a graph of Working Example 1, corresponding to a region in the graph of Comparative Example b, indicated by the arrow (↑)] is high. Thus, with the invention, it is possible to enhance sensitivity of mechanical recognition and an S/N ratio as well.

### Working Example 2

This example represents a case of the discrimination mark according to the invention, with a substance obtained by controlling a content ratio of a stable isotope thereof at a value different from the natural abundance thereof, applied to perforations of a perforated base member.

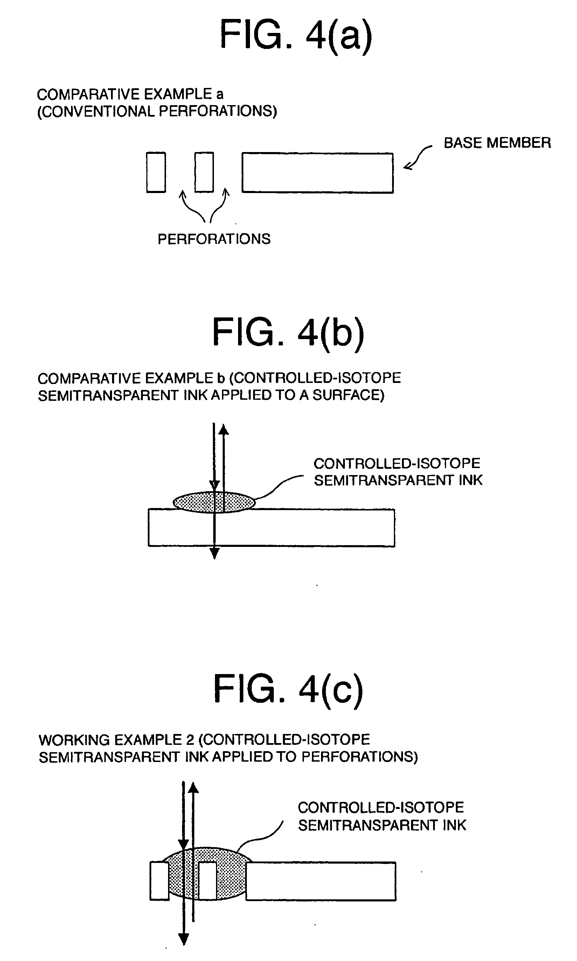

Fig. 4(a) is a view showing conventional perforations (Comparative Example a). Perforations 0.5 mm in diameter are provided at intervals of 1 mm in a region of a 10 mm square of paper about 100 µm thick. These perforations serve as targets for perceptual recognition by visual inspection.

Fig. 4(b) is a view showing a case where the controlled-isotope semitransparent ink is applied to the surface of paper identical in thickness to the paper for Comparative Example a (Comparative Example b). The ink is applied to a thickness about 20 µm. Since difference in isotope content ratio is not shown as a definite difference in properties of ink, the difference in isotope content ratio cannot be recognized by perceptual recognition, but can be discriminated only by mechanical recognition.

Fig. 4(c) is a view showing the present working example of the invention, which is a discrimination mark with the controlled-isotope semitransparent ink applied to perforations of the same perforated paper as described above as a base member (working example 2). The thickness of the ink, including the perforations, is about 130 µm. With this example, discrimination can be effected by mechanical recognition as well in addition to by visual inspection, so that there is provided a discrimination mark having a high-security level.

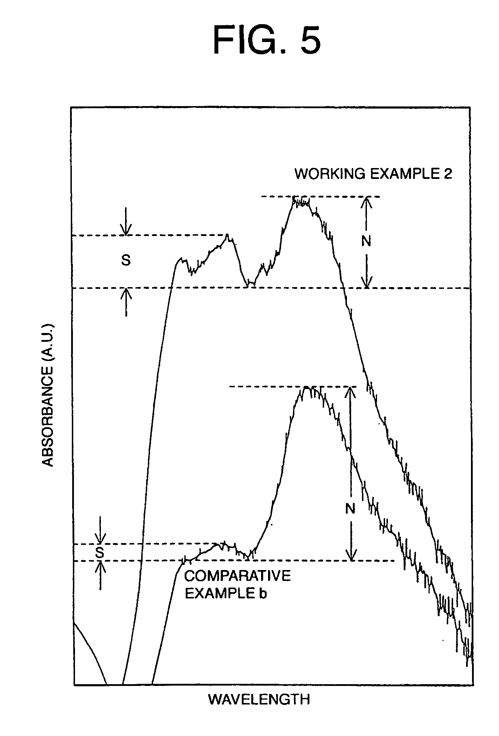

Fig. 5 is a diagram showing results of measuring diffuse reflection spectrum as information reflecting a content ratio of a stable isotope of hydrogen under the same measuring condition (high-speed measurement mode) by use of an infrared spectrophotometer with reference to Comparative Example b (Fig. 4(b)) and Working Example 2 (Fig. 4(c)). As shown in Fig. 5, in the case of Comparative Example b, since the controlled-isotope semitransparent ink is applied to the paper about 100 µm thick, having no thin portion, vibration spectrum of Comparative Example b indicates that a ratio of signal (S) due to the ink to noise (N) due to the paper as the base member (an S / N ratio) is small. In contrast, with reference to vibration spectrum of Working Example 2, since the controlled-isotope semitransparent ink is applied to the perforations, it is shown that an S / N ratio is improved.

### Working Example 3

This example represents a case of the discrimination mark according to the invention, with a substance obtained by controlling a content ratio of a stable isotope thereof at a value different from the natural abundance thereof, applied to depressed portions of an embossed base member.

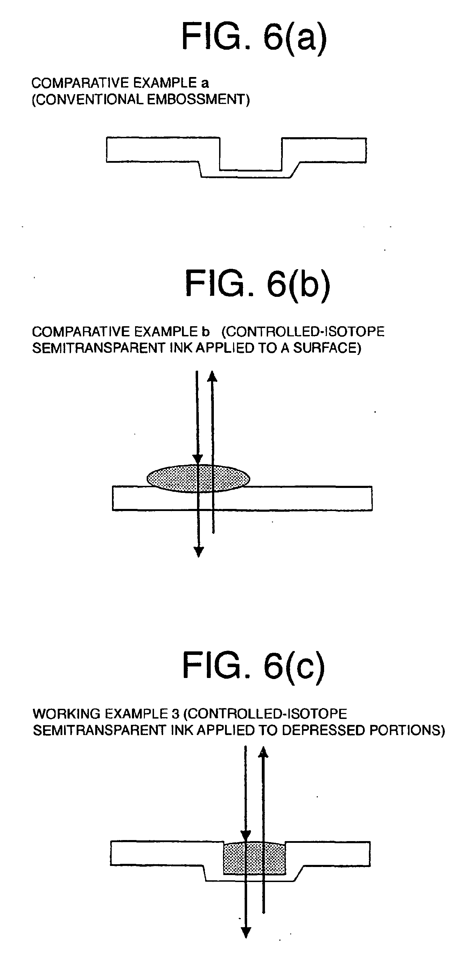

Fig. 6(a) is a view showing a conventional embossment with a name and number, typed on a credit card type plastic card about 0.5 mm thick (Comparative Example a). The embossment doubles as a discrimination mark serving as a target for visual inspection and inspection by the sense of touch, that is, perceptual recognition.

Fig. 6(b) is a view showing a case where the controlled-isotope semitransparent ink is applied to a flat part of the surface of the same credit card type plastic card as above (Comparative Example b). Since difference in isotope content ratio is not shown as a definite difference in properties of the ink, the difference in isotope content ratio cannot be recognized by perceptual recognition, but can be discriminated only by mechanical recognition.

Fig. 6(c) is a view showing the present working example of the invention, which is a discrimination mark with the controlled-isotope semitransparent ink applied to depressed portions of embossment typed on the same credit card type plastic card as above (Working Example 3). The depressed portions of the embossment each are about 0.2 mm in depth, and circular in shape (about 2 mm in diameter) while the ink is applied to a thickness about 0.18 mm. With this example, discrimination can be effected by mechanical recognition as well in addition to by visual inspection, so that there is provided a discrimination mark having a high-security level. Further, since the ink can be applied to a large thickness, it is possible to enlarge an S / N ratio. Furthermore, since this example is structured such that a cavity of the embossment is filled up with the ink, it is possible to reinforce the embossment while preventing wear-out of inked portions.

### Working Example 4

This example represents a case of the discrimination mark according to the invention, formed by applying an ink containing a substance obtained by controlling a content ratio of a stable isotope thereof at a value different from the natural abundance thereof to a depressed part of a base member with intaglio applied thereto.

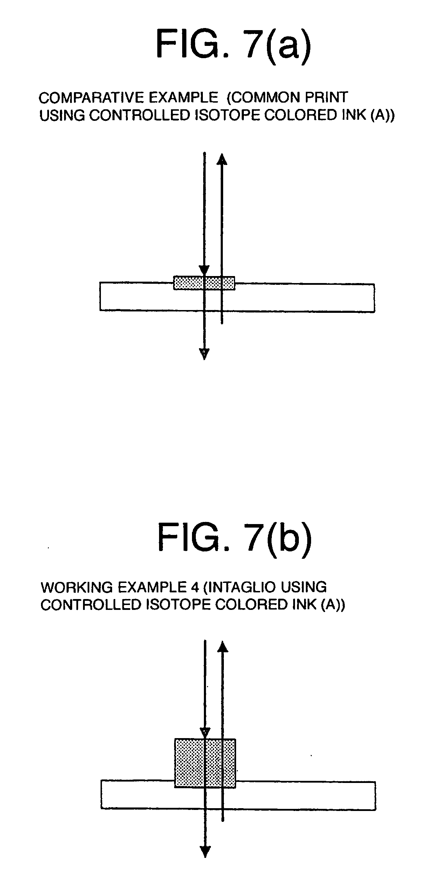

Fig. 7(a) is a view showing common print with the controlled-isotope colored ink (A) applied to paper about 100 µm thick (Comparative Example). The ink is applied to a thickness about 10 µm. Since difference in isotope content ratio is not shown as a definite difference in properties of the ink, the difference in isotope content ratio cannot be recognized by perceptual recognition, but can be discriminated only by mechanical recognition.

Fig. 7(b) is a view showing the present working example of the invention, which is intaglio applied to the same paper as described above as a base member with the use of the controlled-isotope colored ink (A) (Working Example 4). The ink is applied to a thickness about 50 µm. As shown in Fig. 7(b), with the intaglio, the ink can be applied to a large thickness. With this example, discrimination can be effected by mechanical recognition as well in addition to by perceptual recognition such as the sense of sight, an d so forth, so that there is provided a discrimination mark having a high-security level. Further, since the ink can be applied to a large thickness, it is possible to enlarge an S / N ratio by mechanical recognition.

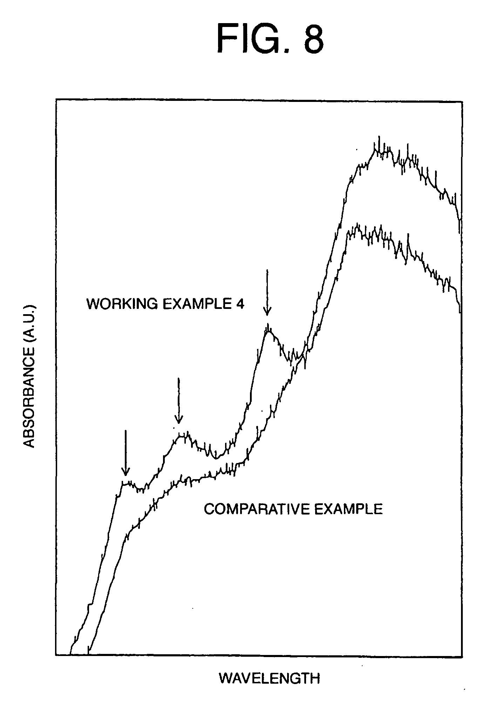

Fig. 8 is a diagram showing results of measuring diffuse reflection spectrum by use of an infrared spectrophotometer with reference to the common print [(Fig. 7(a)): Comparative Example] and the present example of the invention [(Fig. 7(b)): Working Example 4]. In Fig. 8, in the case of Working Example 4, definite absorption due to the ink is shown at spots of a graph, indicated by the arrow (↓) while, in the case of Comparative Example, peaks of a graph, corresponding to the spots of the graph, indicated by the arrow (↓), are hidden in noises and cannot be observed. Thus, with Working Example 4, an S / N ratio by mechanical recognition is found larger as compared with Comparative Example.

### Working Example 5

This example represents a case of the discrimination mark according to the invention, formed of a see-through register (double-side alignment print) applied to a base member.

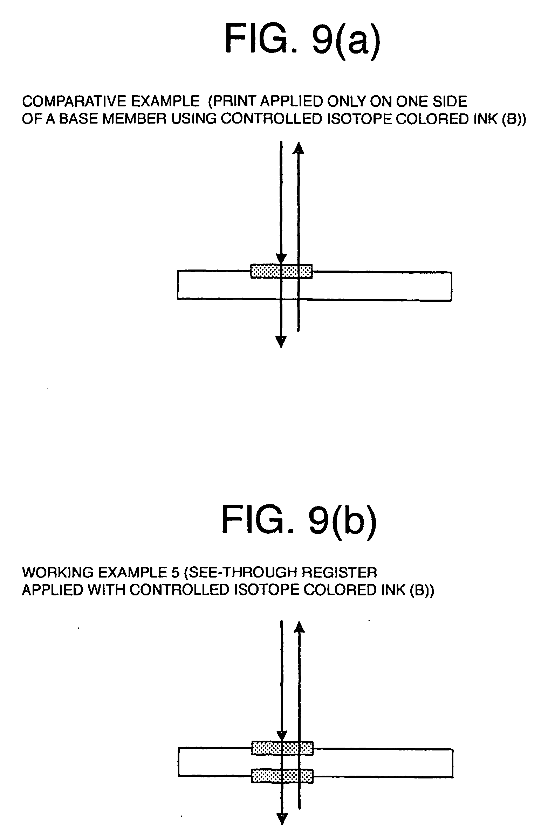

Fig. 9(a) is a view showing print applied only on one side of paper about 100 µm thick by use of the controlled-isotope colored ink (B) to a thickness 25 µm (Comparative Example). Since difference in isotope content ratio is not shown as a definite difference in properties of the ink, the difference in isotope content ratio cannot be recognized by perceptual recognition, but can be discriminated only by mechanical recognition.

Fig. 9(b) is a view showing the present working example of the invention, which is a see-through register, having a printed portion on both sides of paper about 100 µm thick, respectively, with the controlled-isotope colored ink (B) applied thereto (Working Example 5). The ink is applied to a thickness about 25 µm on both sides of the paper, respectively. With this example, discrimination can be effected by mechanical recognition as well in addition to by visual inspection (discrimination by checking whether or not a see-through register position on the top surface and rear surface, respectively, is alignment with each other upon looking through the see-through register), so that there is provided a discrimination mark having a high-security level. Further, since the paper is printed on both sides thereof in this case, inked portions have a large thickness, so that it is possible to enlarge an S / N ratio by mechanical recognition.

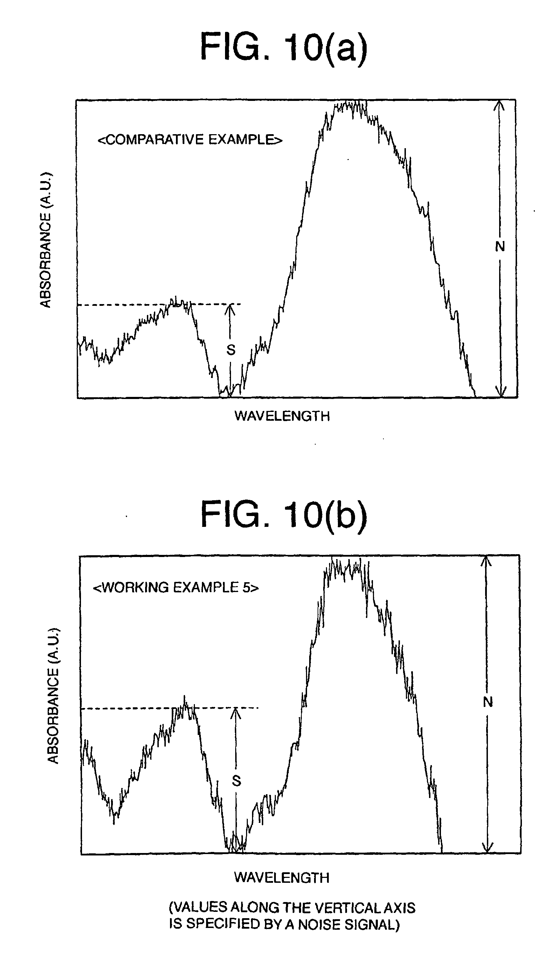

Figs. 10(a) and 10(b) are diagrams showing results of measuring diffuse reflection spectrum by use of an diffuse reflection type infrared spectrophotometer with reference to Comparative Example (Fig. 9(a)) and Working Example 5 (Fig. 9(b)), respectively. As shown in Fig. 10(a), in the case of Comparative Example, a ratio of signal (S) due to the ink to noise (N) due to the paper as a base member (S / N ratio) is found small. In contrast, as shown in Fig. 10(b), in the case of Working Example 5, an S / N ratio is found larger.

### Working Example 6

This example represents a case of the discrimination mark according to the invention, formed by providing a base member with security threads.

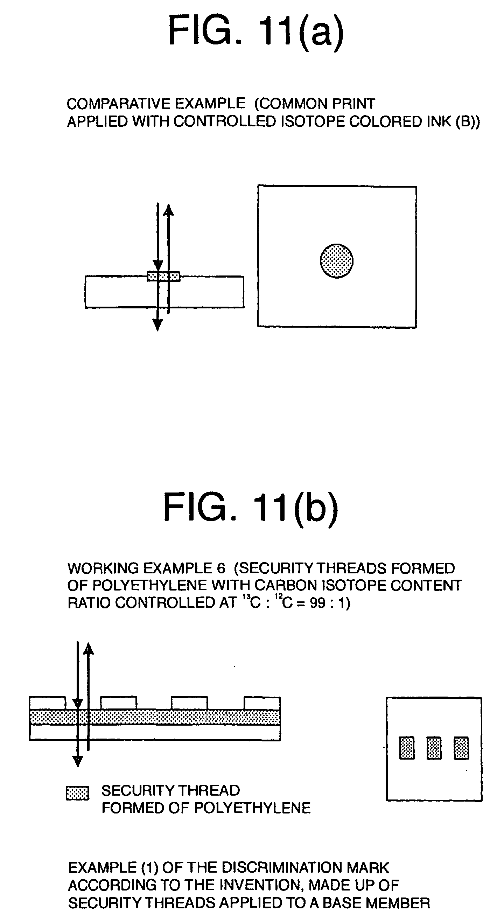

Fig. 11(a) is a view showing the controlled-isotope colored ink (B) 25 µm thick, printed on paper about 100 µm thick (Comparative Example). Since difference in isotope content ratio is not shown as a definite difference in properties of the ink, the difference in isotope content ratio cannot be recognized by perceptual recognition, but can be discriminated only by mechanical recognition.

Fig. 11(b) is a view showing the present working example of the invention (Working Example 6). The security threads 40 µm thick, and 2 mm in width, formed of polyethylene with a carbon isotope content ratio controlled at ¹³C : ¹²C = 99 : 1, are applied to the same paper as described above, about 100 µm thick, as the base member. With this example, discrimination can be effected by mechanical recognition as well in addition to by visual inspection (discrimination by checking whether or not there exist the security threads upon visual inspection), so that there is provided a discrimination mark having a high-security level. The present example is suited to cause a large amount of a substance obtained by controlling a content ratio of a stable isotope thereof at a value different from the natural abundance thereof to be contained in an article, so that the same is effective as means of enhancing detection sensitivity by mechanical recognition.

### Working Example 7

This example represents another case of the discrimination mark according to the invention, formed by providing a base member with security threads.

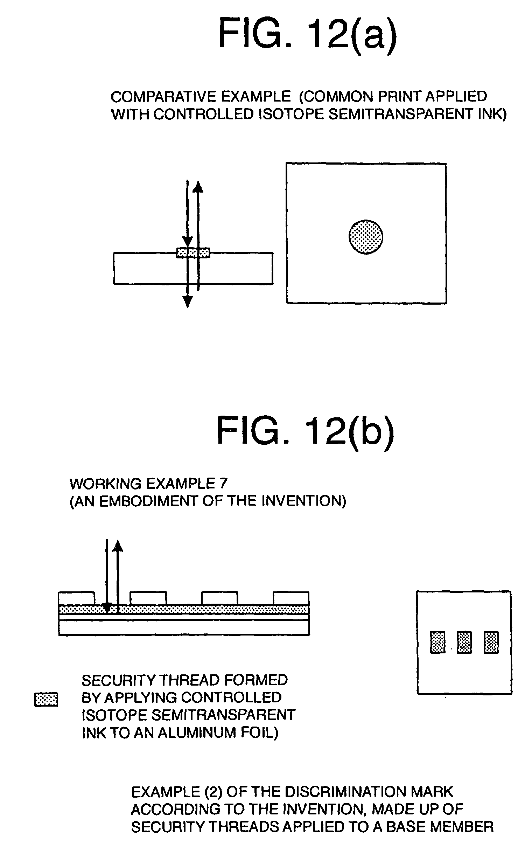

Fig. 12(a) is a view showing the controlled-isotope semitransparent ink 25 µm thick, printed on paper about 100 µm thick (Comparative Example). Since difference in isotope content ratio is not shown as a definite difference in properties of the ink, the difference in isotope content ratio cannot be recognized by perceptual recognition, but can be discriminated only mechanical recognition.

Fig. 12(b) is a view showing the present working example of the invention, comprising the security threads 2 mm in width, prepared by disposing an aluminum foil (that is, material having reflectance higher than that of the base member) 17 µm thick on top of the same paper as described above as the base member, and by applying the controlled-isotope semitransparent ink 24 µm thick on top of the aluminum foil (Working Example 7). With this example, discrimination can be effected by mechanical recognition as well in addition to by visual inspection (discrimination by checking whether or not there exist the security threads upon visual inspection), so that there is provided a discrimination mark having a high-security level. Furthermore, in that case, diffused light is reflected in an incident direction by the aluminum foil having high reflectance, and does not contain peak of noise due to the paper as the base member, enabling spectrum effectively reflecting information of the ink to be obtained, so that it is possible to enlarge an S / N ratio by mechanical recognition.

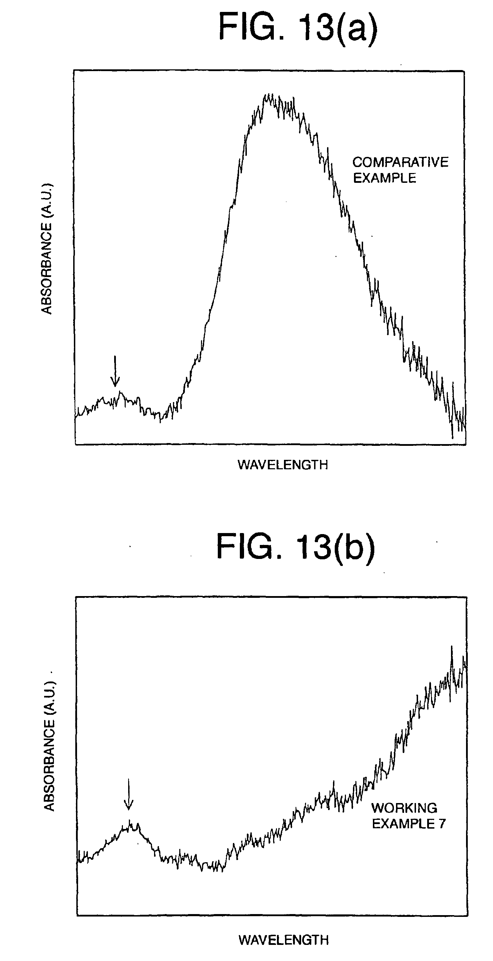

Figs. 13A and 13B are diagrams showing results of measuring diffuse reflection spectrum by use of an infrared spectrophotometer with reference to Comparative Example (Fig. 12(a)) and Working Example 7 (Fig. 12(b)), respectively. In Figs. 13A and 13B, respectively, a peak at a spot of a graph, indicated by the arrow (↓), is attributable to the ink, and in the case of Working Example 7, an S / N ratio by mechanical recognition is found larger as compared with Comparative Example.

### EFFECT OF THE INVENTION

With the invention, it becomes possible to cause a discrimination mark to have both a simple authentication function by perceptual recognition and an accurate authentication function by mechanical recognition by combining a mark having the authenticating function by perceptual recognition with a substance having a content ratio of a stable isotope thereof, controlled at a value different from the natural abundance thereof. In addition, the invention has advantageous effects in that an S / N ratio can be rendered large at the time of the mechanical recognition, thereby enabling authentication by the mechanical recognition to be implemented with high accuracy, and since the substance having the content ratio of the stable isotope thereof, controlled at the value different from the natural abundance thereof, is a rare substance in its own right, and difficult to produce, the discrimination mark according to the invention will have a high security level.

## Claims

1. A discrimination mark capable of coping with both authentication by perceptual recognition and authentication by mechanical recognition comprising a substance obtained by controlling a content ratio of a stable isotope thereof at a value different from the natural abundance thereof.

2. A discrimination mark capable of coping with both authentication by perceptual recognition imparted to a watermarked base member, and authentication by mechanical recognition comprising, applying a substance obtained by controlling a content ratio of a stable isotope thereof at a value different from the natural abundance thereof to thin portions of the watermarked base member.

3. A discrimination mark capable of coping with both authentication by perceptual recognition by the agency of perforations provided in a base member and authentication by mechanical recognition comprising, applying ßa substance obtained by controlling a content ratio of a stable isotope thereof at a value different from the natural abundance thereof to the perforations of the base member as perforated.

4. A discrimination mark capable of coping with both authentication by perceptual recognition by the agency of embossment and authentication by mechanical recognition comprising, applying a substance obtained by controlling a content ratio of a stable isotope thereof at a value different from the natural abundance thereof to depressed portions of the embossment.

5. A discrimination mark capable of coping with both authentication by perceptual recognition by the agency of intaglio and authentication by mechanical recognition comprising intaglio applied by printing with an ink containing a substance obtained by controlling a content ratio of a stable isotope thereof at a value different from the natural abundance thereof.

6. A discrimination mark capable of coping with both authentication by perceptual recognition by the agency of a see-through register and authentication by mechanical recognition comprising a see-through register imparted by printing with an ink containing a substance obtained by controlling a content ratio of a stable isotope thereof at a value different from the natural abundance thereof.

7. A discrimination mark capable of coping with both authentication by perceptual recognition by the agency of a planchette, hologram, security threads, or fibers, and authentication by mechanical recognition comprising the planchette, hologram, security threads, or fibers are a planchette, hologram, security threads, or fibers, formed of material containing a substance obtained by controlling a content ratio of a stable isotope thereof at a value different from the natural abundance thereof.

8. A discrimination mark capable of coping with both authentication by perceptual recognition by the agency of a planchette, hologram, or security threads, and authentication by mechanical recognition comprising the planchette, hologram, or security threads, formed by applying material containing a substance obtained by controlling a content ratio of a stable isotope thereof at a value different from the natural abundance thereof to the surface of material higher in reflectivity than a base member.

9. A discrimination mark according to any one of claims 1 to 8, wherein the substance obtained by controlling the content ratio of the stable isotope thereof at the value different from the natural abundance thereof is a substance containing at least one element selected from the group consisting of carbon, nitrogen, and oxygen, and obtained by controlling a content ratio of a stable isotope of at least one element selected from the group consisting of the carbon, nitrogen, and oxygen, at a value different from the natural abundance thereof.

10. A discrimination mark according to any one of claims 1 to 8, wherein the substance obtained by controlling the content ratio of the stable isotope thereof at the value different from the natural abundance thereof is a substance containing hydrogen and obtained by controlling a content ratio of a stable isotope of the hydrogen at a value different from the natural abundance thereof.
